# EUROPEAN PATENT APPLICATION

(11) **EP 1 001 356 A1**
(43) Date of publication of application: **17.05.2000**
(21) Application number: 99203762.2
(22) Date of filing: 10.11.1999
(51) Int. Cl.: G06F 17/60

(54) **Method and apparatus for collecting individual information profiles**

(30) Priority: 10.11.1998 NL 1010523
(71) Applicant: Stroosnier, Jaap Jan, 6213 EG Maastricht (NL); van Setten, Gijsbertus Jeroen, 3823 KN Amersfoort (NL)
(72) Inventor: Stroosnier, Jaap Jan, 6213 EG Maastricht (NL); van Setten, Gijsbertus Jeroen, 3823 KN Amersfoort (NL)
(74) Representative: Ottevangers, Sietse Ulbe

(57) **Abstract**

A method for presenting information, wherein in a central memory unit a number of information items are coded and stored, each person to be informed, referred to as visitor, is provided with a personal memory means, and writing means are provided for recording in the personal memory means of a visitor a code of information items desired by the visitor, the arrangement being such that each visitor can collect a series of codes on his personal memory means, whereafter these codes are subsequently read from the personal memory means into the central memory unit and the information items corresponding with the code involved are furnished to the visitor involved.

## Description

This invention relates to a method for collecting individual desired-information profiles.

To obtain information, people often visit fairs, such as hobby fairs, trade shows, holiday fairs, and the like, where they visit stands and collect documentation relevant for them. The documentation they take with them, such as folders, leaflets and the like, will be partly read and filed at home or at work and partly discarded straightaway or after being read. This is cumbersome for the visitors of the fair, especially because the folder material has to be carried along all the time. Further, filing the documentation is cumbersome. Moreover, from an environmental point of view, this is undesirable in that undue waste is produced. A disadvantage involved for the providers of the information at the fair is that it is unknown, at any rate unclear, which material is carried off by whom. As a consequence, the supply of the folder material cannot be adjusted, the folder material cannot be adapted, and moreover no followup can be given on the basis of such data. A further disadvantage is that at such a fair it is unclear to the organizers of the fair which information the visitors are seeking, how the visitors proceed across the fair, which information is taken along, and the like.

To provide the exhibitors with more information, it has previously been proposed to provide each visitor with a registration card with a bar code, while personal data have been coupled to the bar code on the card by reading the data into the card. An exhibitor can then use a bar code scanner, linked to a laptop or palmtop computer, to read out the bar code of the visitor, so that the personal data of the visitor are recorded in his computer. The exhibitor can subsequently enter in his computer information regarding the visitor, coupled to the bar code which has been read in. For the visitor, however, the disadvantage of having to carry the folder material with him is thereby maintained, while moreover for the organizer of the fair no further information is made available about movements and interests of the different visitors. For the exhibitor, this system has as a disadvantage that he obtains the personal data of just those visitors with whom he speaks personally, since in each case he must read the bar code with his bar code scanner. Visitors who take folder material with them independently, that is, without addressing the exhibitor, will not be known to the exhibitor. This means that both the exhibitor and the organizer of the fair will obtain an incomplete picture of the visitors of the fair. Further, for the exhibitor, this system entails the disadvantage of being labor-intensive and psychologically unfavorable, since the system can constitute a threshold for visitors to enter into conversation with the exhibitor. In the same way, magnetic cards and chip cards are used instead of bar codes.

The object of the invention is to provide a method for collecting individual desired-information profiles, which obviates the above-mentioned disadvantages of the known systems while maintaining the advantages thereof. To that end, a method according to the invention is characterized by the features according to claim 1.

In this description, an individual desired-information profile is understood to mean an enumeration of information items which the person for whom and/or by whom the profile is drawn up deems to be relevant for himself, or which are deemed to be relevant for him or her. Accordingly, on the basis of such desired-information profiles, it must be possible to provide the visitor with the information items desired by him, such as folders, documents, product information and the like.

In a method according to the present invention, in a central memory unit, a (large) number of information items are stored in coded form, to which end the information items are made available in, for instance, digital form. Every visitor is provided with a personal memory means on which codes of the information items desired by the visitor can be recorded. To that end, code issuing means are provided, for instance at a stand. Each visitor can collect a series of codes on his personal memory means, which codes form at least partly his or her personal desired-information profile. The codes are read from the personal memory means into the central memory unit, such that the desired-information profiles with the visitor's personal data coupled thereto are made available in the central memory unit. The information items corresponding with the code in question can then be furnished to the visitor concerned.

With a method according to the present invention, for the visitor, the advantage is achieved that he only needs to have the personal memory means on him at the fair and does not need to carry with him the folders, brochures and like items, that is, if he is not inclined to do so. By making available his personal memory means to the means for providing the desired codes thereon, these codes can be simply added to his desired-information profile. In principle, this does not require intervention of the exhibitor. For the exhibitor, the advantage thereby achieved is that he can obtain the personal data both of visitors with whom he speaks personally and of visitors who merely collect information items, at least codes thereof, allowing him to focus completely on an informative and representative task. For the exhibitor, the further advantage thereby achieved is that, after the fair, he can determine how often which information items have been sought and tailor his material accordingly, for instance in terms of the amount of printed matter, information henceforth to be offered, and the like. Furthermore, the exhibitor can obtain the personal data of the visitors. For the organizer of the fair, a method according to the present invention has the advantage that a particularly large amount of information is made available in the central memory unit, about the visitors, the information items desired by the visitors, visitor movement patterns, and the like, which information can be used for future fairs, for followup of the fair, for informing the exhibitors and/or visitors, and the like. Such information is particularly attractive commercially.

In an advantageous embodiment, a method according to the invention is further characterized by the features according to claim 2.

Digitization of the information items, such as brochures and the like, provides the advantage that these can be stored particularly simply in their entirety in the central memory unit, together with the corresponding individual codes. Through the visual presentation of the brochures and the like, in physical form or otherwise, with the corresponding code coupled thereto, which can be entered on the personal memory means of a visitor, the visitor can simply add to his desired-information profile the code of each information item at least visually presented to him. After the desired-information profiles have been read into the central memory unit, the corresponding information items can be simply sent to the visitor in question. In particular electronic transmission of the information items is then advantageous because this can be carried out fast and with environmental advantage, since the information items do not all need to be printed in great numbers but can, for instance, be viewed on a display. A further advantage of this is that the filing and forwarding and optional selective printing out of the information items are particularly simplified.

It is then preferred that each information point is provided with at least one writing unit, and as personal memory means a chip card or like writable memory card is utilized, such that for each visitor the codes can be simply entered on the chip card.

In a particularly advantageous embodiment, a method according to the invention is further characterized by the features according to claim 5.

By recording personal information of the visitor on his personal memory means and making same available to the exhibitors via a read/write unit at least at some and preferably all information points visited, the advantage is achieved that in a still simpler manner the exhibitor can dispose of the individual information of those visitors who have requested codes of information items at his stand. Preferably, this occurs through a code exchange, with the code referring to the personal data recorded in the server.

In a preferred embodiment, a method according to the present invention is further characterized by the features according to claim 7, in particular according to claims 7 and 8.

By presenting the information items, such as brochures and the like, to the visitors via an internet or comparable device, the advantage is achieved that the desired information items can be made available to visitors on an individual basis in a particularly simple and fast manner. By generating for each visitor a personal internet site or the like, on which the desired information items are presented, a further advantage is achieved in that these information items are accessible to the visitor. This furthermore provides the advantage that communication with the visitor is simplified still further, which still better enables, for instance, followup after the fair.

It is then preferred that the visitor is informed by electronic route, in particular by e-mail or the like, of the transmission of the desired information items, in which electronic message a hyperlink to the internet site in question is included. As a result, it is still further simplified for the visitor to access the desired information items.

In a further embodiment, a method according to the invention is furthermore characterized by the features according to claim 10.

With such a method, in a particularly simple manner, an analysis can be obtained of visitors of a fair, the desired-information profiles of the visitors, visitor movements and the like, which analysis can be used by both fair organizers and exhibitors, and optionally by the visitors, for the purpose of future fairs, and visits to fairs, respectively.

The invention further relates to an apparatus for collecting individual desired-information profiles, characterized by the features according to claim 11.

With such an apparatus, individual desired-information profiles can be recorded in a particularly suitable manner, such that on the basis of these profiles the desired information can be simply transmitted to the visitors in question. The use of such an apparatus provides to the visitors the advantage that they can be provided with the desired information without their needing to walk around carrying folders, brochures and the like, while the use of such an apparatus is hardly, if at all, a burden on them. For exhibitors and like providers of the information, such an apparatus provides the advantage that they can furnish the desired information in a particularly simple manner, while data of the visitors can be made available to them. Moreover, they can focus substantially on providing information and on representative functions. For organizers of fairs and the like, such an apparatus provides the advantage of making available in a simple manner all kinds of data on visitors, movements patterns, desired-information profiles and the like. A further advantage of such an apparatus is that environmental harm can be limited with it.

In an advantageous embodiment, an apparatus according to the invention is further characterized by the features according to claim 12.

A reading unit for the personal memory means, that is coupled to the central memory unit provides the advantage that the desired-information profiles can be simply read out from the personal memory means for further processing. Contactless readout of the personal memory means then provides the advantage that this can be carried out without hindrance to the user.

In an alternative embodiment, an apparatus according to the invention is characterized by the features according to claim 14.

By coupling the writing units, in particular the read/write units mutually, and preferably with the central memory unit, exchange of data is enabled even more simply.

The use of chip cards or like storage location-containing cards as personal memory means provides the advantage that such cards can be used particularly in a particularly fast and simple manner, are relatively inexpensive and robust, and can be simply carried along, while moreover space is available for, for instance, additional information, imprint of personal data, applying stickers, and the like.

In a particularly advantageous embodiment, an apparatus according to the invention is further characterized by the features according to claim 16.

In such an apparatus, in a fast and simple manner, personal Internet sites are generated, on which the information items corresponding to the visitor's desired-information profile can be presented per visitor by electronic route. Thus, in a particularly simple and fast manner, the desired information is made available individually. It is noted that the automatic generation of Internet sites can also be advantageous in other applications.

In further elaboration, an apparatus according to the invention is further characterized by the features according to claim 18.

When using such an apparatus, the advantage is achieved that, for instance for exhibitors and organizers of fairs, information can be made available, both during and after the fair, about the visitors' use of the information items requested by them. With this information, also after the fair, for instance desired-information profiles can still be adapted, additional information can be offered, and the like. Also, for instance, visitors having the same or comparable desired-information profiles can be simply brought into contact with each other, visitors having a problem can be linked to solvers of such problems or, for instance, job searches can be carried out, by providers and/or visitors.

In a further alternative embodiment, an apparatus according to the invention is furthermore characterized by the features according to claim 19.

By providing at least one central information point where a large number of information items can be centrally visualized together with the associated codes, the advantage is achieved that visitors can still add codes to their individual desired-information profiles without their needing to visit the stands where the information items are primarily offered. Thus, for instance, at the end of the visit to the fair, a forgotten information item can still be requested by recording the corresponding code on the individual memory means at the central information point.

The invention further relates to the use of a chip card or a like storage location-containing writable card or an electronic wand in a method or apparatus according the present invention.

Further advantageous embodiments of methods and apparatuses according to the present invention are set forth in the dependent claims.

To clarify the invention, a number of exemplary embodiments will be further described with reference to the drawings, wherein:
Fig. 1 schematically shows an apparatus according to the present invention in a first embodiment;
Fig. 2 schematically shows an assembly for use in an apparatus according to Fig. 1;
Fig. 3 shows an alternative embodiment of an apparatus according to the invention.

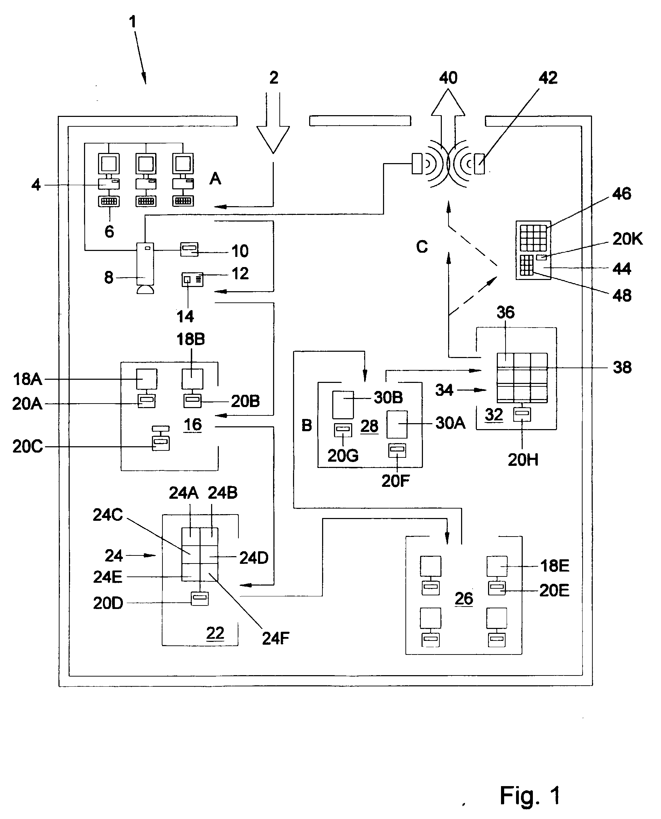

Fig. 1 schematically shows in top plan view an apparatus according to the present invention, in the form of a fair space 1. This fair space 1 comprises a registration zone A, a number of information points, to be further discussed hereinafter, in a visitors' space B and an exit zone C. Via an entrance 2, visitors can enter the registration zone A, where a series of computers 4, data imagers or like units are arranged, into one of which personal data of each visitor can be inputted via a keyboard 6. These computers are coupled to a central server 8 and/or a first writing device 10 with which the inputted personal data, or a code corresponding therewith - with the data being stored in the server under that code, optionally together with other relevant information - can be written on a personal memory means, for instance one designed as a chip card 12. This personal memory means 12 is preferably provided with a chip 14 or like memory means which, using a read/write device to be further described hereinafter, can be read and written to at each information point. The visitor takes the chip card 12 into the visitors' space B. The information points in the visitors' space B are substantially designed as stands. In a first stand 16, for instance, two displays 18A, 18B are arranged, each coupled to their own read/write device 20A, 20B, with which information can be read from the chip card 12, or can be written thereto, when the chip card 12 is inserted into the relevant read/write device 20A, 20B. Further, at stand 16 a portable read/write device 20C is provided which, for instance, an exhibitor can carry with him, and with which, for instance, personal information such as business card data of the exhibitor can be written on the chip card of the visitor, or personal information can be read in therefrom. On each display 18A, 18B, information is presented to the visitor. If the visitor is interested in this information, he can insert his chip card 12 into the read/write device 20A, 20B, whereafter a code (for instance code 18A) coupled to the information presented on the display 18A, 18B is entered, along with a time code, on the personal chip card of the visitor. Next, the visitor can proceed to a second stand 22, where a so-called touch-screen 24 with associated read/write device 20D is arranged. The touch-screen 24 is subdivided into a number of screen fields, with different information items being presented at each screen field 24A-24F, again each coded with a code specific for the information in question (for instance 24A-24F). Of course, scrolling is also possible. If the visitor is interested in this information, he can insert his chip card 12 into the read/write device 20D and then touch the touch-screen 24 at the screen field 24A-F relevant for him, whereafter the code in question is written on his personal chip card 12. He can then take his chip card 12 to a next stand, for instance stand 26, where in a comparable manner he can enter codes of information items presented on displays 18E, using associated read/write devices 20E. In the fourth stand 28, physical documents 30A, 30B are presented, and again at each document 30 a read/write device 20F, 20G is arranged. If the visitor is interested in such a document, for instance document 30A, he can insert his chip card 12 into the read/write device 20F and have the code in question (30A) of the document entered on his chip card. In the fifth stand 32, a display 34 is arranged, having a number of screen fields 36, together with an associated read/write device 20H. For each screen field 36, an operating button 38 is provided, such that when the chip card 12 of a visitor is inserted in the read/write device 20H, the code associated with an information item presented on a corresponding screen field can be written on the chip card using the operating button 38 associated with the corresponding screen field.

After the visitor has visited every stand he wanted to visit, he can leave the fair space 1 via the exit 40, passing a detection gate 42. By means of this detection gate 42, in a manner known per se, the personal chip card or like personal memory means 12 can be read out, at least the memory means 14 present thereon, such that the codes recorded thereon by the visitor can be read into the server 8 and can be coupled to the initially inputted personal data of the visitor. In this way, it is made known to the organizer of the fair and/or to the exhibitors which information items the visitor found interesting, at least of which information items the visitor recorded the codes. On the basis thereof, the information items in question can be transmitted to the visitor. This provides the advantage that the visitor, as he traverses the visitors' space B, does not need to carry along with him any brochures, informational hand-outs, products and the like, and can yet obtain all information or products desired by him.

In the fair space 1 shown in Fig. 1, adjacent the exit 40, an information column 44 is arranged, provided with a touch screen or display 46 of optionally multiple design and a keyboard 48, as well as a read/write device 20K. Using the keyboard 48 and the read/write device 20K, individual codes corresponding with information items shown on the display 46 can be entered on the chip card 12 of a visitor. This provides the advantage of enabling central presentation of information items which, for instance, are also shown at the various stands 16, 22, 26, 28, 32, and optionally supplemental information. The advantage thereby achieved is that a visitor who has missed an information item at one of the stands, at least has not recorded the code thereof on his chip card, can still do so without him needing to go back to the stand in question. In particular at relatively large fairs, busy fairs, and when little time is available, this is particularly advantageous.

In the embodiment shown in Fig. 1, the chip card 12 of each visitor is remotely read out with the aid of the detection gate 42. It is also possible, however, to take in the chip cards 12 of each visitor when leaving the fair and to read them out using, for instance, a unit 10 designed as a read/write device and coupled to the server 8. This is particularly advantageous especially because the chip cards 12 can then be reused.

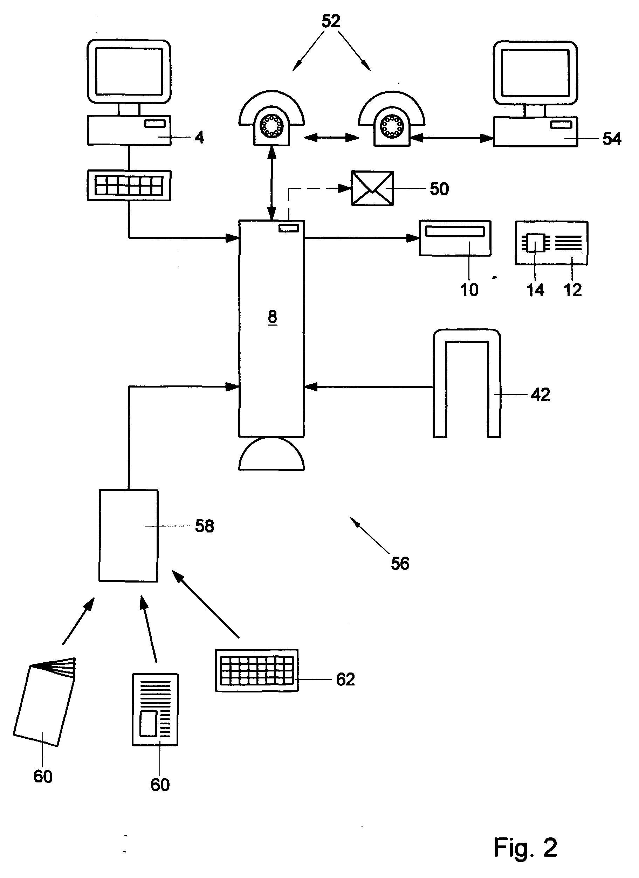

The information items, such as brochures, leaflets, product descriptions, products, manuals and all kinds of other matters can, on the basis of the codes as read in, be physically sent to the visitor, as shown symbolically in Fig. 2 by an envelope 50, but it is preferred to send these information items to the visitor in electronic form, as symbolically represented in Fig. 2 by two telephones 52, one of which is coupled to the server 8 and the other to a personal computer 54 of the visitor, for instance at his business address or home address. An assembly 56 particularly suitable for that purpose, applicable in a fair space 1 according to Fig. 1, is schematically represented in Fig. 2. The assembly 56 according to Fig. 2 comprises a set of computers 4, one of which is shown. 'Computer' is herein understood to mean any suitable means for entering in the server, at least via the writing unit 10 on the chip 14 of a chip card 12 or any other memory means, data, in particular personal data of a visitor to whom the chip card 12 is to be issued. To that end, the computer 4 can be coupled directly to the write, at least read/write device 10 or via the server 8. The assembly 56 further comprises, if desired, as described earlier, a detection gate 42, likewise coupled to the server 8. Further, an assembly 56 comprises a suitable digitizing device 58 by which documents 60 can be stored in digital form in the server 8. Using a keyboard 62, for each document 60 a suitable unique code can be inputted and coupled to the digitized document 60. All digitized documents 60 with their associated codes are stored in the server as central memory unit, such that the information items, such as the brochures, can be retrieved with the aid of the codes. Obviously, via the keyboard 62 or in any other suitable manner, information items can also be read in, coupled to a unique code. A digitizing device 58 can be designed, for instance, as a scanner.

After the visitor, in the manner described with reference to Fig. 1, has collected a number of codes on his chip card 12, this chip card is read out using the read/write device 10 or the detection gate 42 or in any other suitable manner, whereafter the codes, coupled to the personal data or corresponding code of the visitor, are read into the server 8. The server 8 comprises an algorithm for transmitting on the basis of the codes in question the associated information items to the visitor in question. Preferably, these are transmitted via the telephone link 52 to the personal computer 54, for instance by e-mail or a like system. It is then preferred that for the visitor in question, on a computer network suitable for the purpose, such as internet, a site, hereinafter referred to as internet site, is generated, on which the information items in question are presented. It is then particularly advantageous when this internet site is automatically generated by the algorithm and is filled with the information items. Preferably, by electronic mail, such as e-mail, a message is then sent to the visitor in question, reporting at which internet site the information items 60 he desired are presented. In the e-mail, a so-called hyperlink to the internet site in question can be included.

With an assembly according to Fig. 2, information items 60 in which the visitor is interested, as appears from the codes recorded by him, can be made available to him, in particular in digitized form, without his needing to carry these around physically. When the information items are presented in digitized form, particularly great environmental advantages are achieved, while moreover storage and access to the documents in question are simplified for the visitor to a high degree, since these can readily be digitally stored, retrieved, and edited by him.

In principle, writing units 20A-20K will suffice, but it is also possible to use read/write devices with which personal data can be taken over by the exhibitors. Moreover, systematic writing of the chip cards 12 is thereby simplified.

On each visitor's personal memory means, a series of codes are collected which constitute his or her personal desired-information profile. All these profiles are read into the server 8 and are thereby rendered available to the manager for analysis. On the basis thereof, for instance a desired-information profile of the average visitor can be determined, stand visitation at least of information requesting visitors can be determined, and, by chronological arrangement of the requested codes, the movement pattern of the visitor across the fair can be determined. On the basis thereof, many other data can be analyzed as well, for instance the type of visitor, for instance classified according to gender, profession, age, or the like, and associated desired-information profiles, types of visitors and the like. These data can be used by the manager of the fair and/or the exhibitors to adjust, for instance, the information supply, the position of stands, stand lay-out and the like. Further, on the basis of the obtained desired-information profiles of individual visitors, a followup can be given, for instance by presenting to the visitor, subsequently to the fair, further information items that fit within the desired-information profile, for instance on the personal internet site mentioned earlier, or otherwise. It is preferred that data of the personal internet sites referred to are made available to the providers of the information items, these data regarding the use of the requested information items, for instance if and when these are opened, how often they are retrieved, and the like. Also, visitors having comparable or matching desired-information profiles can be brought into contact with each other for further information.

The personal memory means 12 is preferably imprintable, for instance with personal data such as name and function of the visitor, while further the chip card 12 is preferably provided with means for fastening same to clothing, as to a lapel or breast pocket, or other means for the card to be easily carried along. The personal memory means can also be used as a loyalty instrument and can, for instance, be incorporated into a watch or key ring. It may also have a payment function or other function. As alternative to the chip card, other memory means can be used, such as a wand for, for instance, reading bar codes or the like, while the bar codes, as described before, are coupled to specific information items and, at the end of the visit, can be read into the central unit 8. In principle, a fair as shown in Fig. 1 can also be a virtual fair, for instance on an internet site.

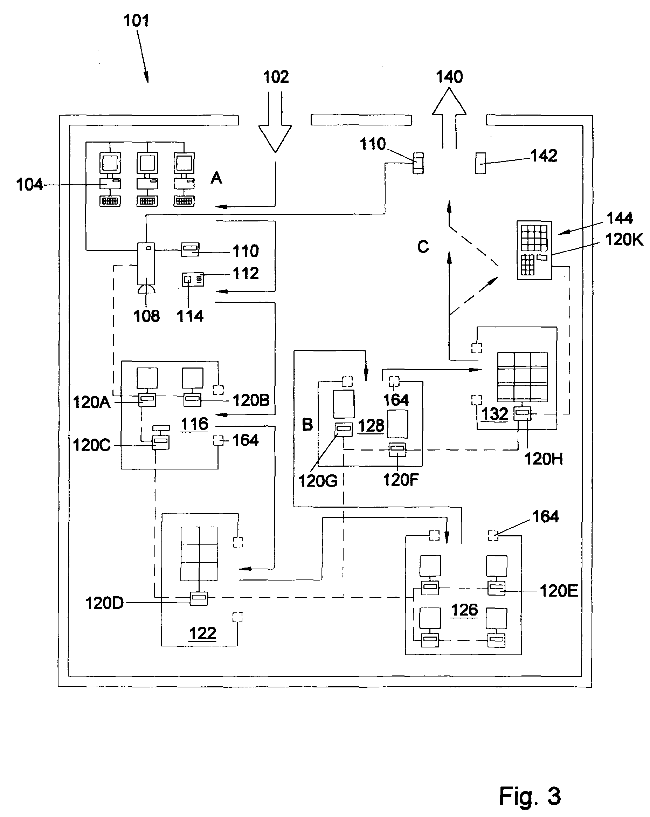

An alternative embodiment of a fair 101 according to the present invention is shown in Fig. 3, where the same or corresponding parts have the same or corresponding reference numerals, increased by 100. These parts will only be discussed insofar as they differ appreciably from the embodiment as shown in Fig. 1.

In a fair space 101 according to Fig. 3, the different read/write devices 120A-120K are mutually coupled, represented in the drawing by broken lines. Further, these read/write units 120 are coupled to the server 108. Through this mutual coupling, codes desired by a visitor can be directly transmitted to the server 108, coupled to a code for the visitor in question which can be read from the chip 114 of the chip card 112 by the read/write unit. In this way, the codes can be written on the personal memory means, but they can also be transmitted to the server 108 directly or after the fair. Again, the chip card 112 can be read out at the exit 140, for instance with a detection gate 142 or with a read/write unit comparable to the read/write unit 110. Again, the data read out can be inputted into the server.

In the embodiment shown in Fig. 3, adjacent the entrance of each stand 116, 122, 126, 128, 132, a gate 164 is included, which, for instance via an electromagnetic field, can communicate with the chip card 112 of a visitor, as a transponder, such that either on the chip card 112 or via the link to the server 108, it can be recorded that the visitor has visited the stand in question, even when he has not collected any information items, at least associated codes, at that stand. Optionally, also when the visitor leaves the stand in question, again a signal can be exchanged between the gate 164 and the chip card 112. This provides the advantage that the movements of the visitors at the fair 101 can be simply and uniformly recorded, even when the visitor collects no, or hardly any, codes on his chip card, at least in his personal desired-information profile.

It will be clear that the arrows shown in Figs. 1 and 3 indicate a movement pattern of a visitor, but that visitors can exhibit any desired other movement pattern in visiting one or more stands.

The invention is not limited in any way to the embodiments presented in the drawing and the description. Many variations thereof are possible within the framework of the invention outlined by the claims.

Thus, it is possible that the personal data of visitors, together with the desired-information profile, are inputted into the server only when the visitors leave. Also, other personal memory means can be used, for instance a computer diskette, punch card-like means and the like, as long as codes of the desired information items can be recorded on the personal memory means and/or personal data can be read therefrom, to be coupled to the information items in question in order to record a desired-information profile. Obviously, fewer, but in particular also many more, stands and read/write units with associated information item display means can be provided at a fair. Obviously, at a stand, different means can be arranged for display of information items. Also three-dimensional products can be shown in this way, coupled to a code and read/write device. The coupling of the read/write units as shown in Fig. 3 can be obtained by direct cabling but also by radio signals or other wireless systems or, for instance, via an electricity grid. Obviously, several servers may be provided and other means can be provided for providing the personal data on the personal memory means.

In a further advantageous embodiment, a potential visitor of a fair can order a chip card 12, 112 or like memory means in advance, preferably via a computer network such as internet, such that a personal memory means 12, 112 is ready for him when he enters the fair. He can also make advance arrangements with exhibitors at the fair, so that he can plan his visit properly in advance. The personal memory means may also, for instance, be sent to him together with a route planning, taking account of interests of the visitor and arrangements made by him. Also, the chip card can then serve as an admission pass. The data are then preferably provided on the chip card by encryption. Obviously, the chip cards can also be applied for in a different way, for instance by telephone or telecopier, and be forwarded by ordinary mail. Obviously, the personal chip card can also be provided with other information and data, for instance an access code for the fair and/or different sections thereof, special offers, combination codes and the like.

These and many comparable variations are understood to fall within the framework of the invention.

## Claims

1. A method for presenting information, wherein in a central memory unit a number of information items are coded and stored, wherein each person to be informed, referred to as visitor, is provided with a personal memory means, and wherein writing means are provided for recording in the personal memory means of a visitor a code of information items desired by the visitor, the arrangement being such that each visitor can collect a series of codes on his personal memory means, whereafter these codes are subsequently read from the personal memory means into the central memory unit and the information items corresponding with the code involved are furnished to the visitor involved.

2. A method according to claim 1, wherein as information items at least a number of digitized brochures and the like are stored in the central memory unit, each provided with an individual code; wherein the brochures and the like are presented at least visually at different information points, said brochures being provided with the corresponding code which can be written on the personal memory means of a visitor; wherein the or each visitor records, or causes to be recorded, a number of codes on his personal memory means, whereafter the codes are read from the personal memory means involved and the corresponding brochures and the like are transmitted to the visitor involved, preferably by electronic route.

3. A method according to claim 2, wherein each information point is provided with at least one writing unit, and as personal memory means chip cards or like writable memory cards are used.

4. A method according to claim 3, wherein each information point is provided with at least one writing unit, with which the or each desired code is written on the personal memory means.

5. A method according to any one of the preceding claims, wherein for each visitor a personal memory means is personalized by recording personal information therein; wherein the writing means are designed as read/write units included at different information points; wherein at different information points visited by the visitor in reality or virtually, information, in particular personal information, is exchanged between the personal memory means of the visitor and the read/write unit.

6. A method according to claim 1 or 2, wherein as personal memory means, a reading wand is used, in particularly a bar code or like code-reading wand.

7. A method according to any one of the preceding claims, wherein the information items such as brochures and the like are presented to the visitor via an internet or comparable device.

8. A method according to claim 7, wherein per visitor a personal internet site or the like is generated, on which the desired information items are presented.

9. A method according to claim 7 or 8, wherein an electronic message, in particular an e-mail, is transmitted to the visitor, reporting the transmission of the desired information items, and preferably including a hyperlink to the storage location, in particular an internet site, where the desired information items are presented.

10. A method according to any one of the preceding claims, wherein the or each visitor at a fair enters personal data, or causes same to be entered, in a personal memory means by electronic route, proceeds to visit a number of stands at the fair, while at a number of stands a number of codes, corresponding to the desired information items, are entered in the personal memory means, and the personal memory means of the or each visitor, preferably when he leaves the fair, is read out into the central memory unit, whereafter the desired information items are transmitted to the visitor, preferably by electronic route, and with a suitable algorithm at least a number of the personal data of the visitor as well as a number of other visitor-related data such as interests, movements at the fair and the like, are analyzed, utilizing the codes recorded on the personal memory means of the visitor involved.

11. An apparatus for presenting information, comprising a central memory unit, a series of personal memory means and a number of writing units, preferably read/write units, the central memory unit storing a number of information items provided with individual codes, the write units being arranged for entering in a personal memory means a series of codes corresponding with said individual codes of the information items, the apparatus further comprising means for entering in the central memory unit the codes recorded in the personal memory means and transmitting the relevant information items to a user of the personal memory means involved.

12. An apparatus according to claim 11, wherein the central memory unit is connected with a reading unit for reading out the personal memory means through electrical contact or contactlessly.

13. An apparatus according to claim 11 or 12, comprising a number of stands each provided with at least one writing unit, in particular a read/write unit, and representation means for display of a number of information items, the or each writing unit being arranged for entering in the personal memory means a code of an information item of interest to the user of the personal memory means involved.

14. An apparatus according to any one of claims 11-13, wherein the writing units, in particular the read/write units, are mutually coupled, and are preferably linked to the central memory unit.

15. An apparatus according to any one of claims 11-14, wherein the personal memory means are designed as chip cards or like storage location-containing cards.

16. An apparatus according to any one of claims 11-15, wherein the central memory unit comprises an algorithm for generating internet sites, coupled to individual users of the personal memory means, the algorithm being further arranged for presenting the information items desired by the user involved on the internet sites involved.

17. An apparatus according to claim 16, wherein the algorithm is furthermore arranged for transmitting to the user involved an electronic message provided with a hyperlink to the internet site involved.

18. An apparatus according to claim 16 or 17, wherein the central memory unit further comprises an algorithm for recording from the internet sites involved information at least regarding the internet sites involved, for instance for maintaining a record of the number of consultations of the internet sites involved and/or the information items presented thereon, for feedback to providers of the information involved and/or other interested parties.

19. An apparatus according to any one of claims 11-18, comprising at least one central information point where a large number of information items, in particular information items offered at different stands, along with the associated codes, can be displayed, preferably electronically, such that at the central information point involved a number of the codes involved can be entered in the personal memory means of a visitor, preferably in addition to codes already recorded thereon.

20. Use of a chip card or like storage location-containing writable card or an electronic reading wand such as a bar code scanner in a method or apparatus according to any one of the preceding claims.
